# EUROPÄISCHE PATENTANMELDUNG

(11) **EP 3 086 426 A1**
(43) Veröffentlichungstag der Anmeldung: **26.10.2016**
(21) Anmeldenummer: 16163891.1
(22) Anmeldetag: 05.04.2016
(51) Int. Cl.: H02H 1/00, H02H 3/10, H01H 89/00

(54) **BRANDSCHUTZSCHALTER**

(30) Priorität: 23.04.2015 DE 102015207444
(71) Anmelder: Siemens Aktiengesellschaft, 80333 München (DE)
(72) Erfinder: Adlhoch, Manfred, 93170 Bernhardswald (DE)

(57) **Zusammenfassung**

Die Erfindung betrifft einen Brandschutzschalter für einen zu schützenden elektrischen Stromkreis, aufweisend eine Sensoreinheit, eine Auswerteeinheit und eine Auslöseeinheit, die den elektrischen Stromkreis bei vorliegen eines durch die Sensoreinheit detektierten und durch die Auswerteeinheit festgestellten Störlichtbogens unterbricht. Die Sensoreinheit oder/und die Auslöseeinheit sind als eigenständige Einheiten ausgeführt, die nicht im Gehäuse des Brandschutzschalters angeordnet sind.

## Beschreibung

Die Erfindung betrifft einen Brandschutzschalter, respektive Arc Fault Detection Device, der Störlichtbögen in elektrischen Stromkreisen erkennen und einen elektrischen Stromkreis unterbrechen kann. Ferner eine Sensoreinheit für einen Brandschutzschalter.

Schutzschalter für elektrische Stromkreise sind allgemein bekannt. Beispiele hierfür sind Überstromschutzschalter, Überspannungsschutzschalter, Fehlerstromschutzschalter, usw. Neuerdings gibt es Schutzschalter gegen Störlichtbögen, auch als Brandschutzschalter, Arc Fault Detection Device, Arc Fault Circuit Interrupter, o.ä. bezeichnet. Diese versuchen beispielsweise mittels einer Messung des Signalspektrums bzw. Frequenzspektrums einer oder mehrerer Leitungen eines elektrischen Stromkreises eventuell vorhandene fehlerhafte Störlichtbögen zu detektieren und im Fehlerfall den elektrischen Stromkreis zu unterbrechen um den Störlichtbogen abzuschalten.

Störlichtbögen können durch eine schlechte Verdrahtung, defekte Isolation von Leitungen bzw. elektrischer Elemente, schlecht geklemmte bzw. sich lösende Verbindungen von Leitungen usw. entstehen. Sie sind häufig Ursache von Bränden.

Störlichtbögen werden in serielle und parallele Störlichtbögen unterteilt. Ein Problem bei der Erkennung von Störlichtbögen besteht darin, den unerwünschten Störlichtbogen, beispielsweise eines sich lösenden Drahtes in einer schlecht geklemmten Verteilerdose, von einem normalen Lichtbogen, bspw. den Kohlebürsten eines Elektromotors in bspw. einem Staubsauger, zu unterscheiden.

Mit Störlichtbögen sind insbesondere Lichtbögen gemeint, sowohl serielle als auch parallele, die durch Fehler im Stromkreis entstehen. Lichtbögen, die regulär beim Schalten bzw. durch den Betrieb von gewünschten elektrischen Verbrauchern entstehen, sind hier nicht gemeint.

Brandschutzschalter verwenden verschiedene Prinzipien zur Ermittlung von Störlichtbögen. Ein Prinzip ist die Messung des Frequenzspektrums in einem elektrischen Stromkreis, d.h. auf der elektrischen Leitung. Hierbei werden die hochfrequenten Signale bzw. Signalanteile im Stromkreis/auf der elektrischen Leitung ermittelt. Mit hochfrequenten Signalen bzw. Signalanteilen sind Signale mit einer Frequenz ab 30 KHz gemeint. Es können aber auch Signale ab einer höheren Frequenz ermittelt werden, wie z.B. ab 50 KHz, 100 KHz, 300KHz, 500 KHz, 800 KHz, 1 MHz, 1,5 MHZ, 2 MHz, usw. Jede Frequenzgrenze ist hier möglich. Mit Hilfe der ermittelten hochfrequenten Signale können Störlichtbögen im elektrischen Stromkreis ermittelt werden.

Obwohl Brandschutzschalter relativ neu im europäischen Bereich sind, erfreuen sie sich zunehmender Beliebtheit. Dabei besteht das Problem, bestehende Anlagen damit nachzurüsten.

Aufgabe der vorliegenden Erfindung ist es, einen Brandschutzschalter universeller einsetzbar zu machen.

Diese Aufgabe wird durch einen Brandschutzschalter mit den Merkmalen des Patentanspruchs 1 und eine Sensoreinheit für einen Brandschutzschalter mit den Merkmalen des Patentanspruchs 9 gelöst.

Vorteilhafte Weiterbildungen der Erfindung sind in den abhängigen Ansprüchen beschrieben.

Erfindungsgemäß ist vorgesehen, dass die Sensoreinheit oder/und Auslöseeinheit eines Brandschutzschalters als eigenständige Einheiten ausgeführt sind, die nicht im Gehäuse des Brandschutzschalters angeordnet sind. Dies hat den Vorteil, dass eine flexible Anpassungsfähigkeit bzw. Integration eines Brandschutzschalters bzw. von Brandschutzschalterfunktionalitäten in bereits existierende bzw. zu bauende Stromkreise, beispielsweise in Niederspannungsanlagen bzw. -Verteilungen, durchführbar ist. Insbesondere mit einer eigenständigen Sensoreinheit ist durch einen flexiblen und modularen Aufbau ein universellerer Einsatz eines Brandschutzschalters möglich. Durch die Abtrennung der Auslöse- und/oder Sensoreinheit (bzw. Erfassungseinheit) ist ein höherer Schutzgrad der modularen Brandschutzelektronik möglich, so dass vorteilhaft der erfindungsgemäße Brandschutzschalter bei hohen Betriebsbemessungsströmen und/oder Betriebsbemessungsspannung in der Niederspannungsanlage verwendet werden kann.

In einer vorteilhaften Ausgestaltung der Erfindung ist der Brandschutzschalter als Modul ausgestaltet. Dabei kann sowohl die Sensoreinheit als auch die Auslöseeinheit abgesetzt sein. Das Modul beinhaltet im Wesentlichen die Auswerteeinheit. Dies hat den besonderen Vorteil, dass das Brandschutz-Modul in bestehende Modul-Einheiten-taugliche Schalter mit aufgenommen werden kann und somit eine Brandschutz-Funktionalität nachgerüstet werden kann.
In einer weiteren vorteilhaften Variante kann auch bereits in der Sensoreinheit ein Teil der Auswerteeinheit realisiert sein, so dass die Auswerteeinheit in einen ersten sensorseitigen Teil der Auswerteeinheit und in einen zweiten Brandschutzschalter-Modul-seitigen Teil der Auswerteeinheit geteilt ist. Beispielsweise kann die sensorseitige Auswerteteileinheit eine Signalverarbeitungseinheit enthalten.

In einer vorteilhaften Ausgestaltung der Erfindung ist der Brandschutzschalter mit einem Schalter zur Unterbrechung eines elektrischen Stromkreises verbindbar. An Stelle einer eigenständigen Auslöseeinheit des Brandschutzschalters wird zur Unterbrechung des elektrischen Stromkreises im Fehlerfall die Auslöseeinheit des Schalters verwendet, die durch den Brandschutzschalter auslösbar ist. Dies hat den besonderen Vorteil, dass keine eigenständige Auslöseeinheit für den Brandschutzschalter erforderlich ist. Vorteilhafterweise wird eine bereits bestehende Auslöseeinheit, die sich bereits im elektrischen Stromkreis befindet, mit verwendet. Der Brandschutzschalter bewertet das Vorhandensein eines Fehlerlichtbogens anhand der verfügbaren Signale und steuert bei Überschreitung von Grenzwerten bzw. Zutreffen der Kriterien für eine Auslösung somit eine separate Abschaltvorrichtung an, die ihrerseits den zu schützenden Anlagenteil von der Stromversorgung trennt. Dies kann durch ein Steuerrelais bzw. Steuerkontakt erfolgen, beispielsweise mit potenzialfreien Kontakt.

In einer vorteilhaften Ausgestaltung der Erfindung ist der Schalter zur Unterbrechung eines elektrischen Stromkreises ein Leitungsschutzschalter, Leistungsschalter oder Lasttrennschalter. Dies hat den besonderen Vorteil, dass Leitungsschutzschalter in Sicherungskästen mit der Brandschutzfunktionalität erweitert werden können bzw. in analoger Weise Leistungsschalter in Niederspannungsanlagen bzw. -Verteilungen.

In einer vorteilhaften Ausgestaltung der Erfindung ist der Brandschutzschalter durch eine erste elektrische Leitung respektive Auslöseleitung mit dem Schalter zur Unterbrechung eines elektrischen Stromkreises verbunden. Dies hat den besonderen Vorteil, dass ein Auslösesignal zur Auslöseeinheit des Schalters übertragbar ist.

In einer vorteilhaften Ausgestaltung der Erfindung ist die Sensoreinheit durch eine zweite elektrische Leitung respektive Sensorleitung mit dem Brandschutzschalter verbunden. Dies hat den besonderen Vorteil, dass ein Sensorsignal zum Brandschutzschalter übertragbar ist.

In einer weiteren Ausgestaltung der Erfindung ist eine Sensoreinheit für einen Brandschutzschalter vorgesehen. Dieser eigenständigen Sensoreinheit ist mindestens ein elektrischer Leiter des Schalters zur Unterbrechung eines elektrischen Stromkreises zuordbar oder zugordnet. Dies hat den besonderen Vorteil, dass eine Sensoreinheit einem Stromkreis nachträglich bzw. entfernt vom Brandschutzschalter zuordbar ist, so dass eine Brandschutzfunktionalität mit entsprechenden Sensoreinheiten bereitstellbar bzw. nachrüstbar ist.

In einer vorteilhaften Ausgestaltung der Erfindung weist der Brandschutzschalter ein Netzteil auf, das außerhalb des Gehäuses des Brandschutzschalters angeordnet ist. Durch eine externe Versorgungsspannung kann der Brandschutzschalter mit Energie versorgt werden. Dies hat den besonderen Vorteil einer kompakten Bauform, der Möglichkeit der Mitbenutzung bereits vorhandener Netzteile/Stützspannungen. Der Brandschutzschalter mit Auswerteelektronik kann so kompakt ausgeführt sein, so dass er wirtschaftlich, kompakt und einfach nachrüstbar ist. In der Regel wird die modulare Auswerteelektronik des Brandschutzschalters mit einer 1-phasigen Hilfsspannungsquelle versorgt.

In einer vorteilhaften Ausgestaltung der Erfindung ist ein Teil der Auswerteeinheit in der Sensoreinheit angeordnet. Die Auswerteeinheit ist in einen ersten sensorseitigen Teil der Auswerteeinheit und in einen zweiten Brandschutzschalter-(Modul-)seitigen Teil der Auswerteeinheit geteilt. Beispielsweise kann die sensorseitige Auswerteteileinheit eine Signalverarbeitungseinheit enthalten. Bei den durch die Sensoreinheit detektierten Signalen handelt es um empfindliche, hochauflösende, im höheren Frequenzbereich liegende, Signale. Eine Übertragung über längere Entfernungen zwischen Sensoreinheit und Auswerteeinheit ist mit Problemen behaftet. Durch eine sensoreinheitsseitige Vorverarbeitung, beispielsweise aktive Vorverarbeitung, der Signale können diese Probleme minimiert bzw. gelöst werden. Dadurch können Informationen über längere Entfernungen in ausreichender Genauigkeit, Geschwindigkeit und Bandbreite übertragen werden. Dabei kann als Übertragungsmedium ein Kommunikationsbussystem Verwendung finden, wie beispielsweise CAN, Profibus, RS232, RS485, Modbus, I2C, USB, ASI, Ethernet, oder ähnliches. Bei einer aktiven Signalvorverarbeitung, beispielsweise mit lokaler Logik, im Sensormodul zur Erfassung aller relevanten Signale ist somit eine elektrische Stromversorgung der Sensoreinheit erforderlich, welche über die Sensorleitung bzw. zweite elektrische Leitung erfolgen kann. Diese kann sowohl als eigenständige Sensorstromversorgungsleitung, neben den eigentlichen Sensorleitung, als auch mittels der Sensorleitung erfolgen. Beispielsweise kann die Sensorleitung auch als Bussystem realisiert sein, wie z.B. mittels USB.

Die eigenständige Sensoreinheit kann alle zu schützenden elektrischen Leitungen erfassen, und enthält in seinem Ausgangssignal auf der Sensorleitung alle Informationen, wie z.B. Laststrom, Lastspannung, beispielsweise über Zeit- und Frequenzverlauf. Bei den elektrischen Leitungen handelt es sich um alle Außenleiter. Optional kann auch der N-Leiter von der Sensoreinheit mit überwacht werden. Ausgewertet werden die Signale von der Auswerteeinheit des Brandschutzschalters. Optional können auch reine Steuergeräte und/oder Monitore an den Sensor anschliesbar sein, welche keine eigenständige Auslösekette zum Unterbrechen der Versorgungsleitungen beinhalten.

In einer vorteilhaften Ausgestaltung der Erfindung ist der Brandschutzschalter mit einer Überwachung des abgesetzten Sensorteils ausgestattet. Somit kann eine fehlerhafte Verbindung zwischen Sensor und Auswerteelektronik erkannt werden. Auch eine Fehlfunktion bzw. ein Defekt in der Sensoreinheit kann überwacht werden. Ggf. können darauf folgende Maßnahmen der Überwachungseinheit, die Teil der Auswerteeinheit sein kann, visuell, akustisch, bzw. durch Auslösung der Trennfunktion (Abschaltung) angezeigt bzw. durchgeführt werden. Im Falle einer unzureichenden Spannungsversorgung, Defekt, Trennung, usw. der Sensoreinheit kann der Brandschutzschalter dies erkennen und eine Alarmmeldung bzw. Auslösung durchführen.

In einer vorteilhaften Ausgestaltung der Erfindung kann der (modulare) Brandschutzschalter mit mehreren ausgelagerten Sensoreinheiten verbindbar sein. Damit ist es möglich, nur einen zentralen Brandschutzschalter zu verwenden. Die mehreren, beispielsweise dezentralen, Sensoreinheiten können in verschiedenen Unterverteilungen eingesetzt sein. Dies hat den besonderen Vorteil einer zentralen Abschaltung bzw. Meldung.

In einer vorteilhaften Ausgestaltung der Erfindung kann der (modulare) Sensorteil in einem anderen Gerät integriert sein. So kann z.B. in einem Leistungsschalter, respektive Moulded Case Circuit Breaker, kurz MCCB, eine Sensoreinheit vorgesehen sein.

In einer vorteilhaften Ausgestaltung der Erfindung ist die Auswerteeinheit mit Zusatzfunktionen ausgestaltet, wie beispielse einer grafischen Anzeige, Melde- bzw. Alarmfunktionen oder/und Relaiskontakte. Beispielsweise kann die Anzeige einer Meßsignalgüte erfolgen, z.B. ob die Rauschstörleistung unter bzw. über einem Grenzwert / kritischen Maß liegt, d.h. die Erkennung der notwendigen Signalmerkmale ggf. nicht mehr eindeutig vorgenommen werden kann. Weitere Vorteile von Alarmmeldungen bzw. einer Voralarmierung ist neben der frühzeitigen Information bei Isolationsfehler noch vor einer Abschaltung die Vermeidung von ungeplanten und kostenintensiven Anlagenstillständen. Dies hat den Vorteil einer höheren Betriebs- und Anlagensicherheit.

In einer vorteilhaften Gestaltung ist der Brandschutzschalter ausgeführt, dass dieser wahlweise zum Melden und / oder zum Schalten verwendet werden kann. Ferner kann der Brandschutzschalter derart ausgestaltet sein, dass:
- Eine Anzeige der aktuellen Messdaten, wie z.B. Rauschlevel bei der Meßfrequenz für Isolationslichtbögen erfolgt.
- Eine Speicherung der Daten, insbesondere bei Auslösung bzw. Überschreiten von Meldeschwellen, erfolgt.

In einer vorteilhaften Ausgestaltung der Erfindung ist der Brandschutzschalter mit einer Kommunikationsleitung ausgestattet, die mit einer Steuerung verbindbar ist. Dadurch kann der Brandschutzschalter mit einer übergeordneten Steuerung zwecks Datenaustauschs verbindbar sein. Die Steuerung kann beispielsweise eine speicherprogrammierbare Steuerung (SPS, PLC) sein.

In einer vorteilhaften Ausgestaltung der Erfindung besitzt der (modulare) Brandschutzschalter verschiedene Alarm-, Melde- und Trip-(Auslöse) Kontakte (Relais) um universell an die Kundenbedürfnisse der jeweiligen Anlage projektiert werden kann. Beispielsweise sind dies ein externe Auslösung (Fernauslösung), ein Hilfsschalterausgang (Ausgelöstmeldung), diverse Warnschwellen/-meldungen, etc. sein.

In einer vorteilhaften Ausgestaltung der Erfindung weist der Brandschutzschalter einen Unterspannungsauslöser auf, der bei Unterschreiten eines Spannungsgrenzwertes ein Signal abgibt. Dieses kann beispielsweise zur Unterbrechung des elektrischen Stromkreises verwendet werden. Dies hat den besonderen Vorteil, dass ein zusätzlicher Unterspannungsschutz möglich ist.

Alle Ausgestaltungen der Erfindung bewirken eine universellere Einsetzbarkeit eines Brandschutzschalters.

Im Folgenden wird ein Ausführungsbeispiel der Erfindung anhand der Zeichnung näher erläutert. Dabei zeigt:
Figur 1 ein erstes Blockschaltbild eines erfindungsgemäßen Brandschutzschalters
Figur 2 ein zweites Blockschaltbild eines erfindungsgemäßen Brandschutzschalters
Figur 3 ein drittes Blockschaltbild eines erfindungsgemäßen Brandschutzschalters

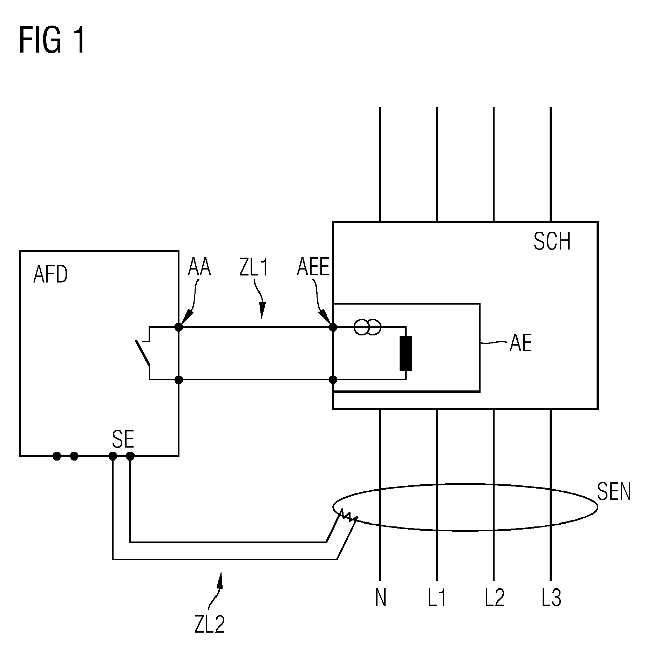

Figur 1 zeigt einen Brandschutzschalter AFD, der als Modul in einem Gehäuse ausgeführt ist, mit einer externen Sensoreinheit SEN, wobei die externe bzw. eigenständige Sensoreinheit SEN nicht im Gehäuse des Brandschutzschalters AFD angeordnet ist. Die Sensoreinheit SEN ist mit einer zweiten elektrischen Leitung respektive elektrische Sensorleitung ZL2 mit einem Sensoreingang SE des Brandschutzschalters AFD verbunden.

Der Brandschutzschalter weist ferner einen Auslöseeinheitausgang AA auf, an dem eine erste elektrische Leitung respektive elektrische Auslöseleitung ZL1 angeschlossen ist, die mit einem Schalter SCH zur Unterbrechung eines elektrischen Stromkreises verbunden ist. Die erste elektrische Leitung ZL1 kann dabei insbesondere mit einem Eingang AEE der Auslöseeinheit AE des Schalters SCH verbunden sein. Die Auslöseeinheit AE des Schalters SCH bewirkt bei Anliegen eines internen oder externen Auslösesignales an der Auslöseeinheit AE eine Unterbrechung der Leiter N, L1, L2, L3 des elektrischen Stromkreises, die an den Schalter SCH angeschlossen sind.
Die Sensoreinheit SEN ist mindestens einem der elektrischen Leiter N, L1, L2, L3 zugeordnet. Die Sensoreinheit, die mindestens einem elektrischen Leiter, aber auch jeden elektrischen Leiter eines Stromkreises zugeordnet sein kann, kann beispielsweise als Shunt-Lastrommessungseinheit oder als Stromwandler ausgestaltet sein, die jeweils den Laststrom pro elektrischem Leiter bzw. Pfad L1, L2, L3 und/oder N (optional) messen.

Der Schalter SCH kann beispielsweise ein Leitungsschutzschalter respektive Miniatur Circuit Breaker oder ein Leistungsschalter, wie beispielsweise ein Kompaktleistungsschalter respektive Moulded Case Circuit Breaker oder Luftleistungsschalter respektive Air Circuit Breaker sein. Weiterhin kann der Schalter beispielsweise ein Lasttrenner, Schütz, Motorschutzschalter, Lasttrennschalter oder ähnlich sein.
Der Schalter kann bei Bedingungen wie Überstrom oder Kurzschluss seinen elektrischen Stromkreis unterbrechen, im Beispiel die Leiter N, L1, L2, L3.
Bekommt der Schalter SCH über den Eingang AEE der Auslöseeinheit AE ein Auslösesignal, wird der elektrische Stromkreis unterbrochen.

Die Sensoreinheit, die Auswerteeinheit und die Auslöseeinheit arbeiten derart zusammen, dass bei vorliegen eines durch die Sensoreinheit detektierten und durch die Auswerteeinheit festgestellten Störlichtbogens die Auslöseeinheit den elektrischen Stromkreis unterbricht.

Der Brandschutzschalter AFD weist in diesem Ausführungsbeispiel erfindungsgemäß lediglich eine Auswerteeinheit auf. Er kann damit beispielsweise als ein Modul ausgestaltet sein. Dieses Modul kann beispielsweise extern angeordnet sein, als auch in einem Schalter integrierbar ausgeführt sein. Erfindungsgemäß ist die Sensoreinheit als eigenständige Einheit ausgeführt, die über eine elektrische Leitung mit dem Brandschutzschalter AFD verbunden ist. Die Sensoreinheit kann damit an beliebigen Stellen in einem elektrischen Stromkreis angeordnet sein, beispielsweise an beliebiger Stelle bei den Leitern N, L1, L2, L3.
Erfindungsgemäß weist der Brandschutzschalter keine interne, d.h. innerhalb seines Gehäuses vorhandene, Auslöseeinheit auf, sondern verwendet im Ausführungsbeispiel die Auslöseeinheit eines anderen Schalters SCH zur Unterbrechung des elektrischen Stromkreises mit. Ebenso kann auch eine externe singuläre Auslöseeinheit an Stelle des Schalters verwendet werden.

Die Erfindung kann insbesondere in Niederspannungsanlagen, d.h. Anlagen mit einer Spannung von bis zu 1000 Volt Wechselspannung oder 1500 Volt Gleichspannung eingesetzt werden.

Mit der Erfindung können bestehende Netze mit einer Brandschutzfunktionalität leicht nachgerüstet werden, als auch zu bauende Netze flexibler mit einer Brandschutzfunktionalität ausgestaltet werden. Die Erfindung erlaubt einen Brandschutzschalter unabhängig vom verwendeten Nennstrom des elektrischen Stromkreises auszugestalten, da nur die Auslöseeinheit und die Sensoreinheit entsprechend nennstromfest (und spannungsfest) sein müssen. Somit lässt sich die Anzahl der Brandschutzschalter für die verschiedenen Einsatzgebiete gegenüber dem Stand der Technik auf wenige erfindungsgemäße Brandschutzschalter (Module) reduzieren. Damit ist eine Erhöhung des Kundennutzen und der Flexibilität möglich.
Es können beispielsweise auch Sensoreinheiten aus anderen Bereichen bzw. fremder Hersteller verwendet werden.

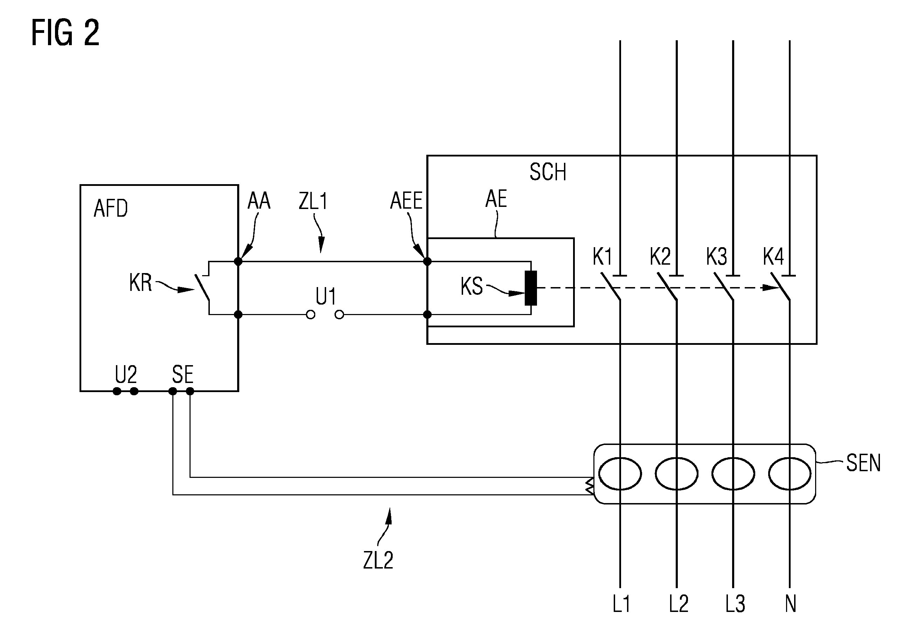

Figur 2 zeigt ein Blockschaltbild gemäß Figur 1, mit dem Unterschied, dass im Schalter SCH Kontakte K1, K2, K3, K4 zur Unterbrechung des elektrischen Stromkreises der Leiter L1, L2, L3, N eingezeichnet sind. Die Kontakte K1, K2, K3, K4 werden durch die Auslöseeinheit AE angesteuert, wodurch ein Öffnen bzw. Schließen des elektrischen Stromkreises bewirkt wird.

Des Weiteren weist die Auslöseleitung ZL1 einen Auslösespannungsanschluss U1 für eine externe Spannungs- bzw. Energieversorgung auf. Am Auslösespannungsanschluss U1 wird eine nicht dargestellte bspw. Spannungsquelle (oder Stromquelle) angeschlossen. Wird ein Störlichtbogen erkannt, schließt der Brandschutzschalter AFD einen Kontakt KR, beispielsweise einen Relaiskontakt. Bei angeschlossener Spannungsquelle wird dadurch der Auslöseleitungsstromkreis geschlossen und dadurch eine Kontaktspule KS aktiviert, die wiederum die Kontakte K1, K2, K3, K4 öffnet und so den elektrischen Stromkreis unterbricht. Der Kontakt KR kann beispielsweise als potentialfreier Kontakt ausgeführt sein.

Weiterhin weist der Brandschutzschalter einen AFD-Spannungsanschluss U2 auf. An diesen AFD-Spannungsanschluss U2 kann eine nicht dargestellte Energiequelle, wie Spannungs- oder Stromquelle, angeschlossen werden, die den Brandschutzschalter mit Energie versorgt. Beispielsweise kann hier ein externes Netzteil, wie ein Schaltnetzteil, angeschlossen sein.

Ferner weist die Sensoreinheit SEN mehrere Sensorelemente auf, konkret im Beispiel für jeden Leiter L1, L2, L3, N ein Sensorelement, dessen Daten über die Sensorleitung ZL2 zum Brandschutzschalter übertragen werden.

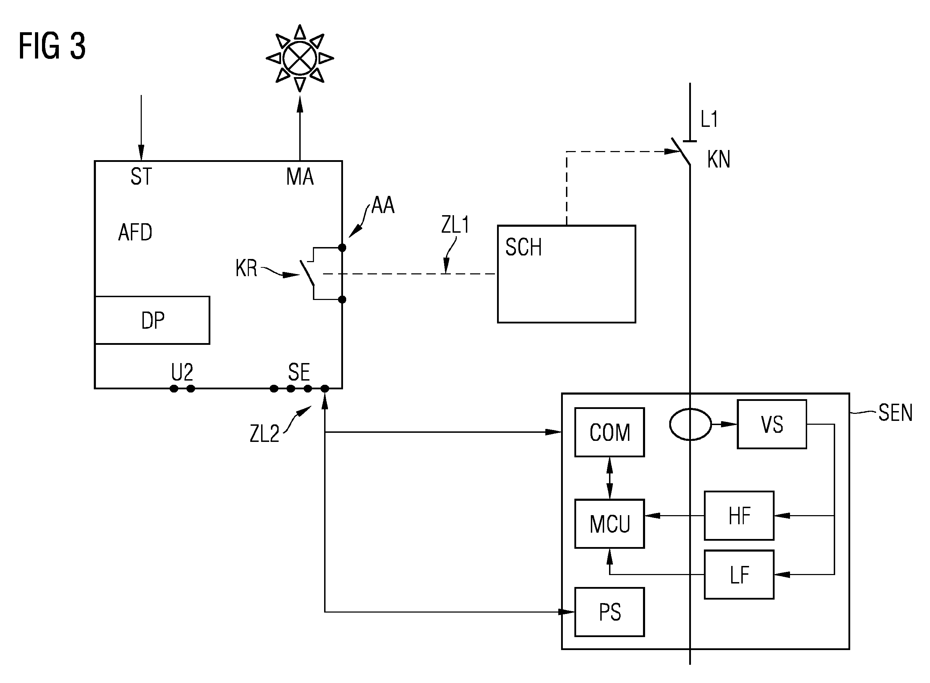

Figur 3 zeigt ein Blockschaltbild gemäß Figur 1 bzw. 2, mit dem Unterschied, dass der Brandschutzschalter bzw. das Brandschutzschalter-Modul AFD ein Display DP, mindestens einen Steuereingang ST oder/und mindestens einen Meldeausgang MA aufweist. Des Weiteren ist der Sensoreingang SE derart ausgestaltet, dass mehrere externe Sensoreinheiten SEN angeschlossen werden können.

Der Schalter SCH ist der derart ausgestaltet, dass er einen externen Kontakt KN aufweist, mit dem der elektrische Stromkreis unterbrochen werden kann.

Die Sensoreinheit ist als so genannte aktive Sensoreinheit ausgestaltet. Diese kann beispielsweise eine sensorseitige Auswerteteileinheit aufweisen. Hierbei ist Auswerteinheit in eine sensorseitige und einen brandschutzschalterseitige Auswerteteileinheit aufgeteilt. Die sensorseitige Auswerteteileinheit ist in der Sensoreinheit angeordnet. Diese kann neben dem eigentlichen Sensor eine Signalverarbeitungseinheit aufweisen. Diese kann:
- mindestens einen Verstärker VS, zur Verstärkung des Sensorsignals, oder/und
- mindestens ein Hochpassfilter HF, zur Filterung von hochfrequenten Signalen zur Ermittlung von Störlichtbögen, oder/und
- mindestens ein Tiefpassfilter LF, zur Filterung der Netzfrequenz oder/und zur Ermittlung von Nulldurchgängen der Netzfrequenz, oder/und
- mindestens eine Prozessoreinheit MCU, zur Verarbeitung bzw. Vorverarbeitung von gemessenen physikalischen Größen des Stromkreises, oder/und
- mindestens eine Kommunikationseinheit COM, zur Kommunikation zwischen Sensoreinheit und Brandschutzschalter, oder/und
- mindestens eine Stromversorgungseinheit bzw. Stromversorgungswandler PS aufweisen, zur Energieversorgung von Einheiten der Sensoreinheit,
aufweisen.
Die Sensoreinheit kann beispielsweise derart ausgestaltet sein, dass ein Sensor ein Signal eines Leiters eines zu schützenden elektrischen Stromkreises erfasst. Dieses Signal dem Verstärker VS zuführt, der es verstärkt. Das verstärkte Signal dem Hochpassfilter (HF) oder/und dem Tiefpassfilter (LF) zugeführt wird. Das bzw. die gefilterten Signale wahlweise einem Analog-Digital-Umsetzer zugeführt werden. Die umgesetzten Signale der Prozessoreinheit MCU zur Verarbeitung bzw. Vorverarbeitung zugeführt werden. Die verarbeiteten Signale durch die Kommunikationseinheit COM zum Brandschutzschalter bzw. Brandschutzschalter-Modul AFD übertragen werden.

Die Sensorleitung ZL2 ist beispielsweise als kombinierte Sensorsignal und Energieversorgungsleitung (zur Spannungs- oder/und Stromversorgung) ausgestaltet.
Ebenso sind separate Leitungen denkbar. Ebenfalls eine separate Energieversorgung der Sensoreinheit SEN durch ein weiteres externes Netzteil. Ferner eine Energieversorgung der Sensoreinheit durch den zu schützenden elektrischen Stromkreis, mittels beispielsweise eines Netzteils das an die Leiter des schützenden elektrischen Stromkreises angeschlossen ist.

Die Sensorleitung ZL2 kann beispielsweise eine USB-Verbindung sein. Ebenso eine Verbindung durch CAN, Profibus, RS232, RS485, Modbus, I2C, USB, ASI oder Ethernet. Ferner ist eine drahtlose Verbindung zwischen Sensoreinheit und Brandschutzschalter möglich.

Die Sensoreinheit weist mindestens einen Sensor auf, wobei vorteilhafterweise zwei Sensoren vorgesehen sein können, beispielsweise einen Spannungs- und/oder Stromsensor.

In der Sensoreinheit SEN oder/und im Brandschutzschalter AFD kann ferner ein Analog-Digital-Umsetzer vorgesehen sein. Zusammenfassend der Nutzen eines erfindungsgemäßen modularen Brandschutzschalter bzw. Brandschutzsystems:
A) Hohe Anlagen- und Betriebssicherheit
   - Alarmmeldungen wahlweise zum Melden oder Abschalten der Anlage
   - Mögliche Fehler bei neu installierten Anlagen oder Inbetriebnahme neuer Geräte sofort erkennen
   - Anlagen und Geräte permanent überwachen anstatt nur stichprobenartig in langen Zeitabständen prüfen (Prüftaste)
   - Ausfallrisiken durch unerwartetes Ansprechen von Schutzeinrichtungen auf ein Minimum reduzieren
   - Vorbeugende Sicherheit zum Schutz von Mensch und Maschine vor Gefährdungen durch Isolationsfehler
   - Steigerung der Sicherheit in Kombination der Brandschutzschalters in Verbindung mit weiteren Schutzschaltern
B) Verbesserte Instandhaltung
   - Umgehende Information durch zentrale und/oder dezentrale Alarmmeldungen
   - Optimale Nutzung der Personal- / Zeitressourcen durch lückenlose Dokumentation und präzise Fehlerortanzeige
   - Schnelles, vorbeugendes Eingreifen durch Ferndiagnose über Netzwerk - Kommunikationsanschluss
C) Höhere Wirtschaftlichkeit
   - Instandhaltungs-, Wartungs- und Betriebskosten spürbar reduzieren
   - Kostenintensive und ungeplante Anlagenstillstände infolge frühzeitiger Information erkennen
   - Produktivitätssteigerung durch höhere Betriebssicherheit
   - Kostenersparnis durch niedrigere Versicherungsprämien bei Verwendung eines Brandschutzschalters
   - Unterstützung für Investitionsentscheidungen durch Erkennen von Anlagenschwachstellen
D) Höhere Brandsicherheit
   - Potentielle Brandgefahren durch Isolationsfehler schon im Entstehen erkennen
   - Hohe Folgekosten durch Sach- und Umweltschäden vermeiden

Obwohl die Erfindung im Detail durch die Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Brandschutzschalter für einen zu schützenden elektrischen Stromkreis, aufweisend eine Sensoreinheit, eine Auswerteeinheit und eine Auslöseeinheit, die den elektrischen Stromkreis bei vorliegen eines durch die Sensoreinheit detektierten und durch die Auswerteeinheit festgestellten Störlichtbogens unterbricht,
**dadurch gekennzeichnet,**
**dass** die Sensoreinheit als eigenständige Einheit ausgeführt ist, die in einem Sensorgehäuse außerhalb eines Gehäuses des Brandschutzschalters angeordnet ist.

2. Brandschutzschalter nach Patentanspruch 1,
**dadurch gekennzeichnet,**
**dass** die Auslöseeinheit außerhalb des Gehäuses des Brandschutzschalters angeordnet ist.

3. Brandschutzschalter nach Patentanspruch 1 oder 2,
**dadurch gekennzeichnet,**
**dass** die Sensoreinheit durch eine elektrische Sensorleitung mit dem Brandschutzschalter verbunden ist, durch die ein Sensorsignal zum Brandschutzschalter übertragbar ist.

4. Brandschutzschalter nach Patentanspruch 1, 2 oder 3,
**dadurch gekennzeichnet,**
**dass** die Sensoreinheit einen Strom- oder/und Spannungssensor enthält.

5. Brandschutzschalter nach Patentanspruch 1, 2, 3 oder 4,
**dadurch gekennzeichnet,**
**dass** die Auswerteeinheit in eine sensorseitige Auswerteteileinheit und eine brandschutzschalterseitige Auswerteteileinheit aufgeteilt ist, wobei die sensorseitige Auswerteteileinheit in der Sensoreinheit angeordnet ist.

6. Brandschutzschalter nach Patentanspruch 5,
**dadurch gekennzeichnet,**
**dass** die sensorseitige Auswerteteileinheit eine Signalverarbeitungseinheit enthält.

7. Brandschutzschalter nach Patentanspruch 6,
**dadurch gekennzeichnet,**
**dass** die Signalverarbeitungseinheit eine Prozessoreinheit (MCU), mindestens eine Filtereinheit oder eine Kommunikationseinheit (Com) enthält.

8. Brandschutzschalter nach einem der vorhergehenden Patentansprüche,
**dadurch gekennzeichnet,**
**dass** der Brandschutzschalter als Modul ausgestaltet ist.

9. Brandschutzschalter nach einem der vorhergehenden Patentansprüche,
**dadurch gekennzeichnet,**
**dass** der Brandschutzschalter mit einem Schalter zur Unterbrechung eines elektrischen Stromkreises verbindbar ist, dessen Auslöseeinheit an Stelle der Auslöseeinheit des Brandschutzschalters verwendet wird und durch den Brandschutzschalter auslösbar ist.

10. Brandschutzschalter nach Patentanspruch 9,
**dadurch gekennzeichnet,**
**dass** der Schalter zur Unterbrechung eines elektrischen Stromkreises ein Leitungsschutzschalter, Leistungsschalter, Motorschutzschalter oder Trennschalter ist.

11. Brandschutzschalter nach Patentanspruch 2, 9 oder 10,
**dadurch gekennzeichnet,**
**dass** der Brandschutzschalter durch eine elektrische Auslöseleitung mit den Schalter zur Unterbrechung des elektrischen Stromkreises verbindbar ist, wodurch ein Auslösesignal zur Auslöseeinheit des Schalters übertragbar ist.

12. Brandschutzschalter nach einem der vorhergehenden Patentansprüche,
**dadurch gekennzeichnet,**
**dass** der Brandschutzschalter ein Netzteil aufweist, das außerhalb des Gehäuses des Brandschutzschalters angeordnet ist.

13. Brandschutzschalter nach einem der vorhergehenden Patentansprüche,
**dadurch gekennzeichnet,**
**dass** der Brandschutzschalter mit mehreren Sensoreinheiten verbindbar ist.

14. Brandschutzschalter nach einem der vorhergehenden Patentansprüche,
**dadurch gekennzeichnet,**
**dass** der Brandschutzschalter einen Unterspannungsauslöser aufweist, der bei Unterschreiten eines Spannungsgrenzwertes ein Signal abgibt.

15. Sensoreinheit für einen Brandschutzschalter nach einem der Patentansprüche 1 bis 14.

16. Sensoreinheit nach Patentanspruch 15,
**dadurch gekennzeichnet,**
**dass** die Sensoreinheit mindestens ein elektrischer Leiter des Schalters zur Unterbrechung des elektrischen Stromkreises zuordbar ist.
